# EUROPEAN PATENT APPLICATION

(11) **EP 3 621 000 A1**
(43) Date of publication of application: **11.03.2020**
(21) Application number: 19191289.8
(22) Date of filing: 12.08.2019
(51) Int. Cl.: G06Q 10/00

(54) **OPERATION ASSIST DEVICE**

(30) Priority: 10.09.2018 JP 2018168439
(71) Applicant: Aioi Systems Co., Ltd, Tokyo 143-0016 (JP)
(72) Inventor: Yoshikawa, Takamichi, Tokyo, 143-0016 (JP); Iida, Tetsuya, Tokyo, 143-0016 (JP); Egawa, Takayoshi, Tokyo, 143-0016 (JP)
(74) Representative: Henkel & Partner mbB

(57) **Abstract**

[Problem to be solved]

Operation efficiency is to be improved.

[Means to solve the problem]

An operation assist device 1 is provided with a camera 30, a processor 61 and a projector 20. The camera 30 acquires a capture image of an item shelf 10 on which a plurality of boxes 50 is arranged. The processor 61 identifies a position of a first box 50-1 among the plurality of boxes, based on the captured image and determines a position of a display area 100-1 corresponding to the first box. The projector 20 displays an instruction destined to a worker in the display area 100. In addition, the first box 50-1 may be provided with a marker 51. In this case, the processor 61 may identify a position of the first box 50-1, based on a position of the marker 51 in the captured image.

## Description

### [Technical Field]

The present invention is related to an operation assist device.

### [Background Art]

An operation assist device is a device which instructs workers about which to pick up among various items (for example, part(s) and/or good(s)) arranged on a shelf and is widely used in production lines and logistics bases. As an example, an operation assist device is used in a production line to instruct workers about parts to be assembled into a target product and a number thereof among various parts accumulated on a parts storage (typically, a parts shelf). As another example, an operation assist device is used in a logistics base to instruct an worker about goods to be stored in a target sipper (container) and a number thereof among various goods stocked in a warehouse (typically, a goods shelf).

An operation assist device is provided with a display device for giving instruction to workers. As a display device of an operation assist device, most traditionally, lamps and segment display devices have been used while in recent years, use of projectors is proposed. For example, "Application of Mixed Reality Technology to Order Picking for Warehouse Storage (2)", Akitoku Hashimoto et al., proceedings of the 19th Annual Conference of Virtual Reality Society of Japan, September 2014, pp. 553-556 (Non Patent Literature 1), discusses about merits and demerits of wearable type projector and installation type projector in sorting operation assistance.

One of requirements required to the operation assist device is prevention of mistake in operation. To prevent a mistake in an operation, various mechanisms are proposed. For example, Japanese Patent Publication JP 2005-001781 A (Patent Literature 1) discloses a picking assist device which measures a weight of goods stored in each sipper and judges whether the goods stored in sippers are right based on measured weights. In addition, Japanese Patent Publication JP 2006-321590 A (Patent Literature 2) discloses a picking assist device with a configuration of detecting a position of a worker's hand passing through a frontage of a goods shelf by use of infrared and generating a warning in a case in which the detected position is improper.

### [Citation List]

### [Patent Literature]

[Patent Literature 1] Japanese Patent Publication 2005-001781 A
[Patent Literature 2] Japanese Patent Publication 2006-321590 A

### [Non Patent Literature]

[Non Patent Literature 1] "Application of Mixed Reality Technology to Order Picking for Warehouse Storage (2)", Akitoku Hashimoto et al., proceedings of the 19th Annual Conference of Virtual Reality Society of Japan, September 2014, pp. 553-556

### [Summary of the Invention]

### [Problem to be solved by the invention]

When starting operations by use of operation assist device, it is necessary to set positions of lamps and segment display device or displaying positions of projector in accordance with positions of items. With consideration of those situations, an objective of the present invention is to provide operation assist device to efficiently perform operations. Other objective will be understood with following disclosures and explanations of embodiments.

### [Means for solving the problems]

In the following, means for solving the problems will be explained by using numbers and/or symbols used in embodiments of the invention. Those numbers and/or symbols are added in parentheses for reference in order to show an example of relationship between description of claims and embodiments of the invention. Therefore, descriptions with parentheses are not intended to be used for limitation in interpretations of claims.

In order to achieve the above described objective, an operation assist device (1) related to a first aspect of the present invention is provided with a camera (30), a processor (61) and a projector (20). The camera (30) acquires a captured image of an item shelf (10) on which a plurality of boxes (50) is arranged. The processor (61) identifies a position of a first box (50-1) among the plurality of boxes, based on the captured image, and determines a position of a display area (100-1) corresponding to the first box. The projector (20) displays an instruction for a worker in the display area (100).

An operation assist device (1) related to a second aspect of the present invention is provided with a sensor (40) and a processor (61). The sensor (40) detects a position of an object in a monitoring area set to an item shelf which contains an item. The processor (61), in a first mode, detects a mistake in picking operation, based on a detection result of the sensor; the processor (61), in a second mode, identifies an item to which replenishment is required, based on a detection result of the sensor.

### [Effects of the invention]

In accordance with the operation assist device related to the present invention, operation efficiency can be improved.

### [Brief Description of the Drawings]

Fig. 1 is a front view showing a configuration of an operation assist device related to a present embodiment.
Fig. 2 is a right side view showing a configuration of the operation assist device related to the present embodiment.
Fig. 3 is a perspective view of the box in Fig. 1.
Fig. 4 is an example of an image captured by the camera in Fig. 1.
Fig. 5 is a diagram showing a system configuration of the operation assist device related to the present embodiment.
Fig. 6 is an example of box information registered to the processor in Fig. 5.
Fig. 7 is a flowchart showing processes when setting the position of the box to the processor.
Fig. 8 is a flowchart showing processes when notifying an item to be replenished.
Fig. 9 is a right side view showing a configuration example of the operation assist device related to the present embodiment.

### [Description of Embodiments]

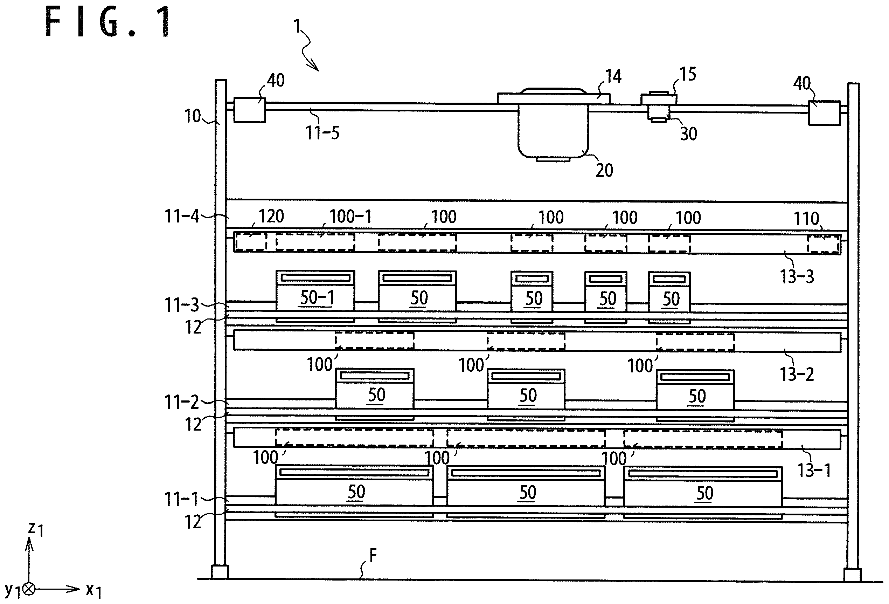

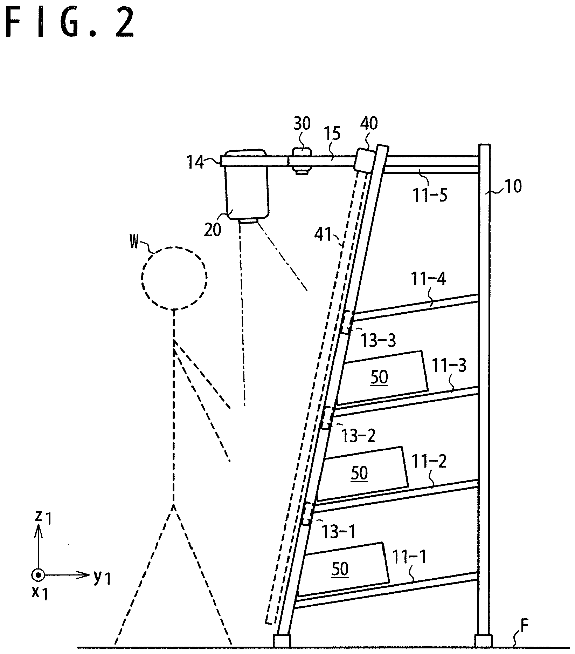

As shown in Fig. 1, an operation assist device 1 related to the present embodiment is provided with an item shelf 10, a projector 20, a camera 30 and a sensor 40. The item shelf 10 is placed on a floor F and is provided with a plurality of shelves 11 (a first shelf 11-1, a second shelf 11-2, a third shelf 11-3, a fourth shelf 11-4, a fifth shelf 11-5) which are arranged and aligned in a vertical direction. To facilitate understanding, the following will be explained by use of a Cartesian coordinate system. A direction in which a frontend of a shelve 11 extends will be called x₁ direction. A direction perpendicular to the x₁ direction and parallel to the floor F will be called y₁ direction. The vertical direction of the item shelf 10 will be called z₁ direction. It should be noted that a front side of the item shelf 10 designates the direction in which people operates as shown in Fig. 2.

On three shelves from the bottom (the first shelf 11-1, the second shelf 11-2, the third shelf 11-3), a plurality of boxes 50 to store items is placed. A bar 12 is provided to a shelf 11 on which a box 50 is arranged in order to prevent the box 50 from falling. In addition, boxes 50 can be arranged in a straight line on each shelf 11 by placing the boxes 50 in contact with the bar 12.

In addition, a screen 13 extending in the x₁ direction is provided on an upper shelf 11 adjacent to the shelf 11 on which the box 50 is placed, at a front end thereof, that is, at an end in the -y₁ direction. In particular, a first screen 13-1 is provided at an end in the -y₁ direction of the second shelf 11-2 adjacent to and above the first shelf 11-1 on which the box 50 is placed. Similarly, a second screen 13-2 and a third screen 13-3 are respectively provided to the third shelf 11-3 at an end thereof in the -y₁ direction and the fourth shelf 11-4 at an end thereof in the -y₁ direction.

In addition, each of the shelves 11 (the first shelf 11-1, the second shelf 11-2, the third shelf 11-3) on which boxes 50 are placed are arranged inclined to the y₁ direction, as shown in Fig. 2. In particular, a shelf 11 on which a box 50 is placed is arranged so that a back end thereof (an end at +y₁ direction) is positioned higher than a front end thereof (an end at -y₁ direction) in z₁ direction. Thus, a worker W can easily pick up an item from the box 50.

The front end of each shelf 11 is arranged to be aligned in +y₁ direction in a view from the z₁ direction in order from the first shelf 11-1 in the bottom stage. In particular, the front end of the second shelf 11-2 is arranged in +y₁ direction compared to the front end of the first shelf 11-1. The front end of the third shelf 11-3 is arranged in +y₁ direction compared to the front end of the second shelf 11-2. The front end of the fourth shelf 11-4 is arranged in +y₁ direction compared to the front end of the third shelf 11-3. The front end of the fifth shelf 11-5 is arranged in +y₁ direction compared to the front end of the fourth shelf 11-4.

In addition, a projector 20 is placed at the fifth shelf 11-5 in the top stage, as shown in Fig. 2. The projector 20 is supported by the fifth shelf 11-5 via an arm 14. The arm 14 is provided so as to protrude forward of the fifth shelf 11-5. In other words, the projector 20 is placed in -y₁ direction from the front end of the fifth shelf 11-5. Thus, the projector 20 displays instructions destined to the worker W by a projection on the screen 13.

When the worker W picks up an item (for example, parts or goods) stored in the box 50, the operation assist device 1 displays instructions (for example, specification of an item to pick up) destined to the worker W on the screen 13. The worker W picks up the specified item from the box 50, based on the display on the screen 13. For example, it is now considered that the worker W is instructed to pick up an item stored in the first box 50-1. Here, it is considered that the first box 50-1 is placed at an end of the third shelf 11-3 in -x₁ direction. In this case, the operation assist device 1 displays the item stored in the first box 50-1 and a number thereof to pick up on a first display area 100-1, among areas of the screen 13, which is above the first box 50-1. The worker W checks the first display area 100-1 which is displaying, among display areas 100, and picks up an item stored in the first box 50-1 below the first display area 100-1. Thus, the worker W can reduce mistakes in operations by checking the display areas 100 that the operation assist device 1 makes to display.

In addition, a sensor 40 is placed on the fifth shelf 11-5 in the top stage. The sensor 40 detects positions of objects such as hands in a monitoring range 41 set at the front side of the item shelf 10, as shown in Fig. 2. In particular, the monitoring range 41 is set at a front side of a space formed between the shelf 11 on which the box 50 is placed and an upper shelf 11 adjacent thereto. In addition, a monitoring range 41 may be set at a front end of a space formed between the box 50 and the upper shelf 11 adjacent to the box 50.

The worker W picks up an item stored in the first box 50-1 in accordance with the instruction displayed on the screen 13. At that time, a hand of the worker W passes through the monitoring range 41. As a result, the sensor 40 detects a position of the hand of the worker W passing the monitoring range 41. On the basis of this detection result, the operation assist device 1 can judge whether the worker W is picking up an item from the specified first box 50-1. If the operation assist device 1 judges that the position of the worker W's hand is different from the position of the first box 50-1, the operation assist device 1 notifies the worker W. That is, the operation assist device 1 notifies the worker W when detecting a mistake in operation during the picking by the worker W. For example, the projector 20 notifies the worker W by displaying red flashes on the screen 13. The item shelf 10 may be provided with a speaker to notify the worker W by sound and/or voice.

Further, the worker W touches the first display area 100-1 after having picked up a specified number of items from the first box 50-1. The sensor 40 detects the worker W's hand in the monitoring range 41 corresponding to the first display area 100-1. As a result, the operation assist device 1 judges that the operation of picking from the first box 50-1 has ended.

In addition, the camera 30 is placed on the fifth shelf 11-5 in the top stage. The camera 30 is supported by the fifth shelf 11-5 via an arm 15. The arm 15 is also provided so as to protrude forward of the fifth shelf 11-5. In other words, the camera 30 also is placed in -y₁ direction from the front end of the fifth shelf 11-5.

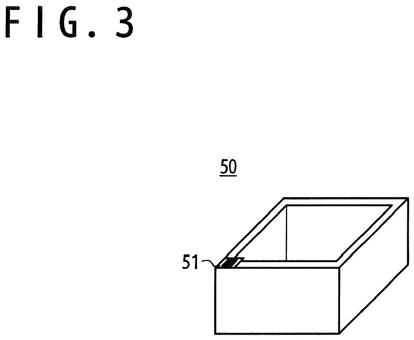

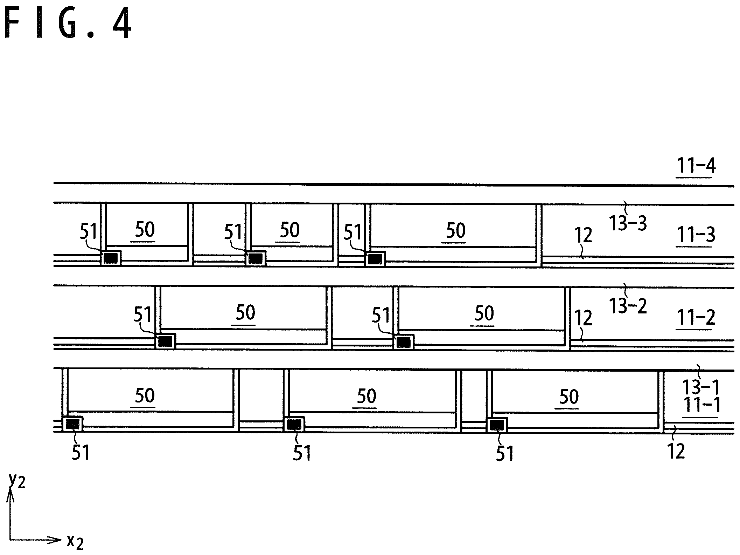

The camera 30 captures an image of each shelf 11 from above the item shelf 10 in order to specify the position of the box 50. In a view from the z₁ direction, each shelf 11 is arranged so that the front end thereof is aligned in order from the bottom stage in +y₁ direction. Thus, the camera 30 can capture an image of the front end of the box 50 placed on each shelf 11. In addition, a marker 51 is added to the box 50 on at least one of four corners in the top side thereof, as shown in Fig. 3. The box 50 is place on the shelf 11 so that this marker 51 is arranged forward of the shelf 11. Thus, the camera 30 can capture an image of the marker 51 of the box 50 placed on each shelf 11, as shown in Fig. 4.

The image captured by the camera 30 is analyzed with a direction in which the front end of the shelf 11 extends, called as x₂ direction, and a direction orthogonal thereto, called as y₂ direction. Here, +y₂ direction is a direction from forward to backward of the shelf 11. Since the markers 51 are added on the front end of the boxes 50, markers 51 of boxes 50 arranged on a same shelf 11 are aligned in x₂ direction in the captured image. As a result, the operation assist device 1 can specify the position in x₁ direction, where the box 50 is placed on the shelf 11, from a position in x₂ direction. In addition, the front end of each shelf 11 is arranged so as to be aligned in +y₁ direction in a view from z₁ direction, that is, a capturing direction of the camera 30. For this reason, the front end of each shelf 11 in the captured image is aligned in +y₂ direction. In particular, in the captured image, the front end of the second shelf 11-2, which is above adjacent to the first shelf 11-1, is positioned in +y₂ direction compared to the front end of the first shelf 11-1 in the bottom stage. The front end of the third shelf 11-3, which is above adjacent to the second shelf 11-2, is positioned in +y₂ direction compared to the front end of the second shelf 11-2. For this reason, the box 50 placed on the second shelf 11-2 is positioned in +y₂ direction compared to the box 50 placed on the first shelf 11-1. In addition, the box 50 placed on the third shelf 11-3 is positioned in +y₂ direction compared to the box 50 placed on the second shelf 11-2. In other words, in y₂ direction, an area in which the marker 51 of the box 50 placed on the first shelf 11-1 in the bottom stage is reflected can be distinguished from an area in which the marker 51 of the box 50 placed on the second shelf 11-2 at the second stage is reflected. Similarly, in y₂ direction, an area in which the marker 51 of the box 50 placed on the second shelf 11-2 in the second stage is reflected can be distinguished from an area in which the marker 51 of the box 50 placed on the third shelf 11-3 in the third stage is reflected. Thus, the shelf 11 on which the box 50 is placed can be specified on the basis of the position of the box 50, that is the position of the marker 51, in y₂ direction.

Here, the marker 51 may be an Augmented Reality (AR) marker, a Quick Response (QR) code (registered trademark) or the like and is used to identify the box 50 from the captured image. For this reason, a position of each box 50 may be specified on the basis of an image captured by the camera 30.

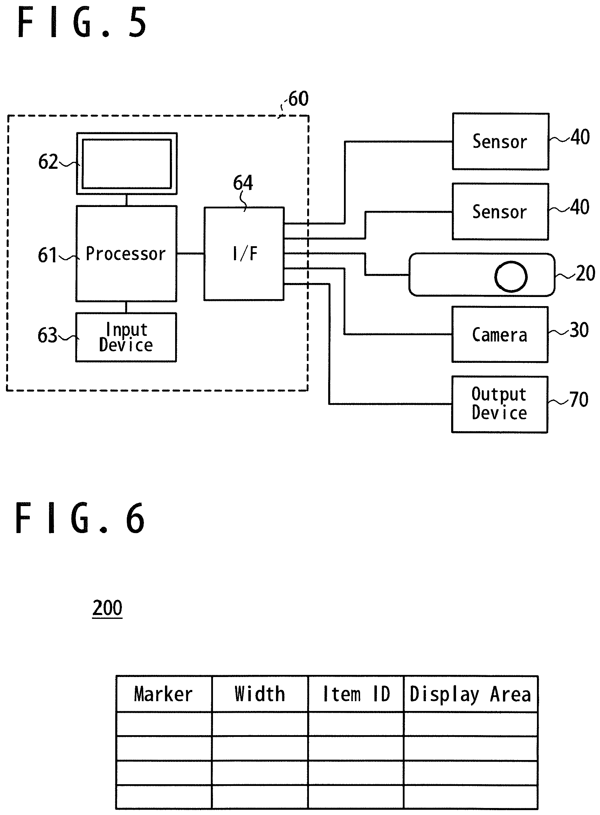

Next, a system configuration of the operation assist device 1 will be described. As shown in Fig. 5, the operation assist device 1 is provided with a management terminal 60. The management terminal 60 controls operations of the operation assist device 1. For example, the management terminal 60 controls the image that the projector 20 displays on the basis of the captured image of the camera 30 and the detection result of the sensor 40. The management terminal 60 is provided with a processor 61, a display device 62, an input device 63 and an interface 64.

The interface 64 is electrically connected to the camera 30, the sensor 40 and the projector 20. In particular, the interface 64 receives image information showing the image captured by the camera 30 from the camera 30. In addition, the interface 64 receives position information showing the position of the object detected by the sensor 40 from the sensor 40. Further, the interface 64 transmits display information showing an image to be displayed to the projector 20. The interface 64 is connected with the camera 30, the sensor 40 and the projector 20 by wire or wirelessly. In addition, the operation assist device 1 may be provided with an output device 70 (for example, a speaker or the like) which notifies to the worker W or the like. In this case, the output device 70 as well is electrically connected to the interface 64.

The processor 61 performs data processing to control operations of the operation assist device 1. For example, the processor 61 generates instruction data specifying the item that the worker W should pick up and the number thereof. In particular, the processor 61 generates instruction data for displaying a number to pick up on the display area 100 corresponding to the box 50 in which the item to pick up is stored. The processor 61 generates display information to display instructions destined to the worker W at a desired position on the basis of the generated instruction data to transmit to the projector 20.

For example, the processor 61 judges, on the basis of the detection result of the sensor 40, whether the worker W is picking up the specified item. In particular, the processor 61 judges whether the position detected by the sensor 40 is included in an area corresponding to the specified box 50. In a case in which the position detected by the sensor 40 is not included in the area corresponding to the specified box 50, the processor 61 judges that a mistake in operation has occurred, generates display information for displaying red flashes and transmits the display information to the projector 20. In addition, the processor 61 may generate sound and/or voice information showing a mistake in operation and output a warning from the output device 70. Here, the area corresponding to the box 50 is, for example, an area in the monitoring range 41 in -y₁ direction from the box 50. In addition, with regard to this area, an edge in -x₁ direction may be an edge of the box 50 in -x₁ direction, an edge in +x₁ direction may be an edge of the box 50 in +x₁ direction, an edge in -z₁ direction may be the shelf 11 on which the box 50 is placed and an edge in +z₁ direction may be the shelf 11 above adjacent thereto.

In addition, for example, in a case in which the sensor 40 detects an object in an area corresponding to the display area 100 of the box 50, the processor 61 judges that the picking-up of the item is completed. In particular, when the picking-up of the item is completed, the worker W touches the display area 100 above the specified box 50. For this reason, the sensor 40 detects the worker W's hand in the area in -y₁ direction of the display area 100. In a case in which the position detected by the sensor 40 is included in the area corresponding to the displaying display area 100, the processor 61 judges that the operation is completed.

The display device 62 displays various data that the management terminal 60 holds, such as instructions destined to the worker W. In addition, the input device 63 inputs data to be set to the processor 61, or the like. The input device 63 is exemplified by a keyboard, a mouse, a microphone or the like. In addition, the management terminal 60 is exemplified by a general purpose personal computer or the like.

### (Identification of a position of a box)

The operation assist device 1 can identify the position of the box 50 in accordance with the captured image of the camera 30. For this reason, the operation assist device 1 can identify the position of the box 50 in which each item is stored by analyzing captured images of the camera 30 after the box 50 is placed.

As shown in Fig. 6, box information 200, in which widths, that is, lengths in x₁ direction, of the marker 51 added to the box 50 and the box 50, item ID showing the item stored in the box 50 and a range of the display area 100 corresponding to the box 50 are associated is registered in the processor 61. This box information 200 is registered in advance from the input device 63 except the range of the display area 100.

Operations of the operation assist device 1 for identifying the position of the box 50 will be described. As shown in Fig. 1, a setting request area 110 for setting the position of the box 50 is provided on the screen 13. In a case in which the worker W changed the position of the box 50, the worker W touches the setting request area 110. The setting request area 110 is an area not included in the display area 100. An image for distinguishing the setting request area 110 from the display area 100 is displayed in the setting request area 110.

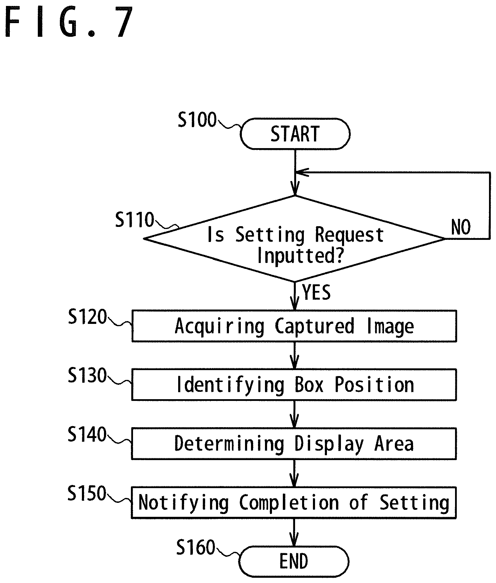

When the worker W touches the setting request area 110, the sensor 40 detects the worker W's hand in -y₁ direction of the setting request area 110. As shown in Fig. 7, the processor 61 judges that a setting request of the box 50 is inputted, on the basis of the detection result of the sensor 40 (step S110^{:} Yes). In particular, in a case in which the position detected by the sensor 40 is in -y₁ direction of the setting request area 110, the processor 61 judges that a setting request is inputted. In a case in which the position detected by the sensor 40 is not a space corresponding to the setting request area 110, the processor 61 judges that no setting request is inputted (step S110: No).

When a setting request is inputted, the processor 61 acquires a captured image from the camera 30 (step S120). For example, the processor 61 transmits an image capturing signal showing an instruction of capturing an image to the camera 30. The camera 30 captures an image of the item shelf 10 in accordance with the image capturing signal and transmits the captured image to the processor 61. In addition, the camera 30 may always capture images. In this case, the processor 61 acquires the captured image which is captured when the setting request is inputted.

As shown in Fig. 4, the marker 51 added to each box 50 is included in the captured image of the camera 30. For this reason, the processor 61 identifies the position of the box 50 to which the marker 51 is added in accordance with the position of the marker 51 (step S130). In particular, the processor 61 identifies a range of each shelf 11 in y₂ direction in the captured image. Since the camera 30 is fixed to the item shelf 10, the range of each shelf 11 in y₂ direction may be registered in advance from the input device 63. Next, the processor 61 detects the marker 51 in a range of the first shelf 11-1 provided at the bottom stage. The processor 61 identifies the position of the box 50 on the first shelf 11-1 on the basis of the position in which the marker 51 is detected in x₂ direction. Further, the processor 61 searches the detected marker 51 in the box information 200 and extracts the width of the box 50 and the item ID corresponding thereto. Here, since the width of the box 50 is acquired, both edges of the box 50 in x₁ direction can be identified. Next, the processor 61 detects as well the marker 51 in the range of the second shelf 11-2 and the range of the third shelf 11-3 too and identifies the position of the box 50. Thus, the processor 61 identifies the shelf 11 on which the box 50 is placed on the basis of the position of the box 50 in y₂ direction, that is, the position of the marker 51. In addition, the processor 61 identifies the position of the box 50 in x₂ direction, that is, the position in x₁ direction of each shelf 11 on the basis of the position of the marker 51.

The processor 61 determines the display area 100 corresponding to the box 50, on the basis of the position of the specified box 50 (step S140). In particular, the processor 61 determines the edge of the display area 100 in - x₁ direction as the edge of the box 50 in -x₁ direction and determines the edge of the display area 100 in +x₁ direction as the edge of the box 50 in +x₁ direction. The processor 61 determines the range of the screen 13 provided adjacent to above the shelf 11 on which the box 50 is placed as the display area 100 in z₁ direction. Determined display area 100 is registered in the box information 200.

When the processor 61 has specified the position of every box 50 and has determined the display area 100, the processor 61 notifies to the worker W that setting operation is completed (step S150). For example, the display to the setting request area 110 may disappear by touching the setting request area 110 and the setting request area 110 may be displayed when the setting operation is completed. In addition, sounds and/or voices showing that the setting operation is completed may be outputted from a speaker included in the output device 70. At that time, the processor 61 generates display information and/or sounds and/or voices information showing that setting operation is completed and transmits the generated display information and/or sounds and/or voices information to the projector 20 and/or the output device 70. In other words, the processor 61 generates and transmits control signals for controlling a display of the projector 20 and/or the output device 70.

As described above, although the position of the box 50 is changed, the operation assist device 1 can complete setting operation without registering the position of the box 50 from the input device 63 to the management terminal 60. In other words, the position of the box 50 in which each item is stored can be identified on the basis of the marker 51. In addition, similar processes can be performed in a case in which a box 50 is newly placed as well. Thus, since the position of the box 50 in which each item is stored can be identified even if the boxes 50 are moved, the display area 100 in which the number to pick up is to be displayed can be identified on the basis of the item to pick up. Therefore, boxes 50 can be easily moved and efficiency of the operation can be improved. It should be noted that the operation assist device 1 searches the item to be picked up in the box information 200 and extract a corresponding display area 100 when the projector 20 displays instructions destined to the worker W. Display information for displaying instructions destined to the worker W in the extracted display area 100 is transmitted to the projector 20.

### (Replenishment of items)

When a number of an item stored in a box 50 becomes low, the worker W replenishes this item. Thus, as shown in Fig. 1, a replenishment request area 120 for requesting a replenishment of items is provided in the screen 13. When the number of the item stored in the box 50 becomes low, the worker W touches the replenishment request area 120. After that, the worker W touches the display area 100 corresponding to the box 50 with the low number of items and again touches the replenishment request area 120. As a result, the operation assist device 1 acquires the item to be replenished and notifies other workers by use of the output device 70.

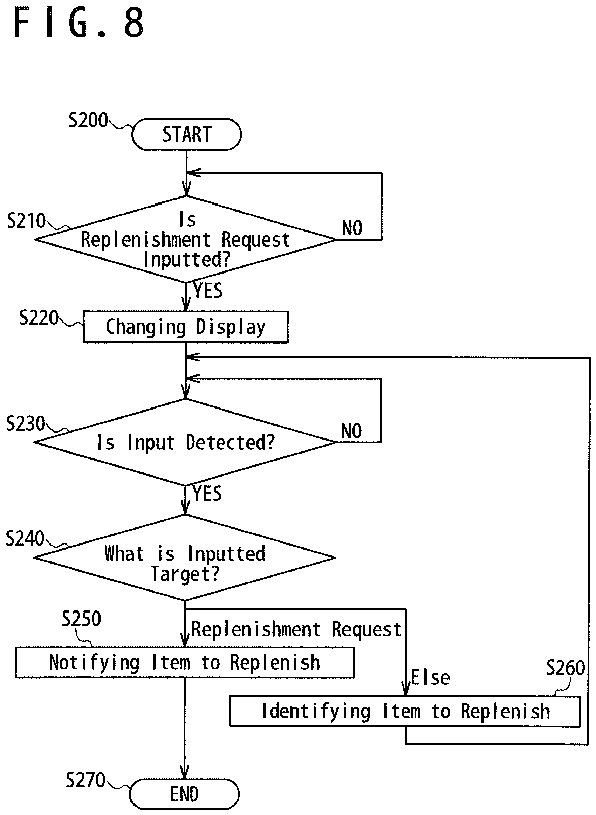

When the worker W touches the replenishment request area 120, the sensor 40 detects the worker W's hand in -y₁ direction of the replenishment request area 120. As shown in Fig. 8, the processor 61 judges that the replenishment request of the item is inputted, on the basis of the detection result of the sensor 40 (step S210: Yes). In particular, the processor 61 judges that the replenishment request is inputted in a case in which the position that the sensor 40 detected is in -y₁ direction of the replenishment request area 120. The processor 61 judges that no replenishment request is inputted in a case in which the position that the sensor 40 detected is not a space corresponding to the replenishment request area 120.

When the replenishment request is inputted, the processor 61 changes the display of the projector 20 (step S220). For example, the processor 61 generates image information showing image(s) with which every display area 100 can be recognized and transmits to the projector 20. For example, the processor 61 generates image information showing image(s) with which every display area 100 becomes blue. As a result, the operation assist device 1 notifies to the worker W that an operation mode has been switched to a mode for requesting replenishment. In addition, every display area 100 may display a name of the item stored in the corresponding box 50.

The worker W touches the display area 100 corresponding to the box 50 in which the item to be replenished is stored. For this reason, the sensor 40 detects the position of the worker W's hand. The processor 61 acquires the position that the sensor 40 detected (step S230: Yes). Since the position that the sensor 40 detected is a space corresponding to the display area 100 (step S240: Else), the processor 61 identifies the item to replenish (step S260). For this reason, the processor 61 searches the display area 100 in the box information 200 and extracts the corresponding item ID. The item shown by the extracted item ID is identified as the item of which replenishment is requested. Thus, the processor 61 identifies the box 50 in which the requested item is stored on the basis of the detection result of the sensor 40 and identifies the item stored in the box 50 as the requested item. The operation assist device 1 changes the color of the display area 100 corresponding to the identified item. That is, the processor 61 generates image information showing an image, of which the color is changed, of the display area 100 corresponding to the box 50 in which the identified item is stored and transmits to the projector 20. As a result, the projector 20 displays an image, of which the color is changed, of the display area 100 of the box 50 corresponding to the requested item. As a result, the worker W can check the requested item.

In a case in which there is other item to replenish, the worker W touches other display area 100. Similarly, the sensor 40 detects the position of the worker W's hand and the processor 61 identifies the item to replenish. In addition, the operation assist device 1 changes the color of the display area 100 of the requested box 50.

When the worker W selects every item to replenish, the worker W touches the replenishment request area 120. For this reason, the sensor 40 detects the worker W's hand in -y₁ direction of the replenishment request area 120. Since the position that the sensor 40 detected is a space corresponding to the replenishment request area 120 (step S240: Replenishment Request), the processor 61 generates a list information of the item to replenish and transmits to the output device 70 (step S250). In other words, the processor 61 transmits control signals for controlling the output device 70. The output device 70 displays a list of items to replenish and notifies to other workers. When the output device 70 received the list information of items to replenish, the output device 70 may sound an alarm. In addition, the processor 61 generates image information showing an image that the projector 20 was displaying before replenishment request and transmits the image information to the projector 20. As a result, the operation assist device 1 notifies to the worker W that the operation mode has been switched from a mode of requesting replenishment to an ordinary mode.

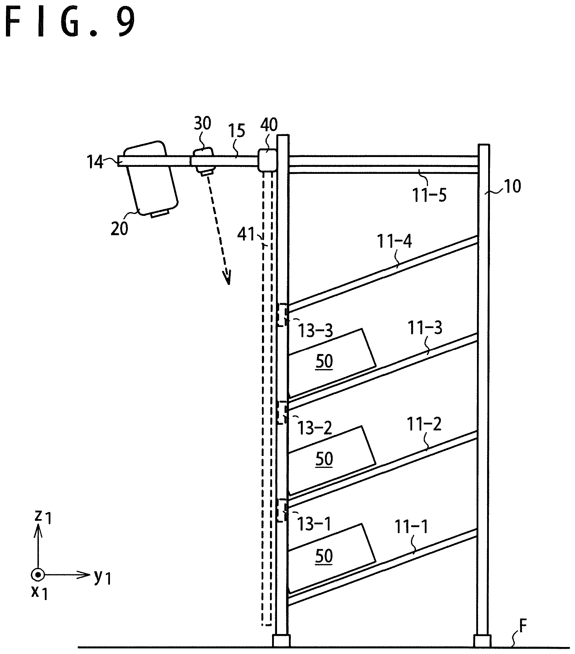

Although the above described embodiment shows an example in which the front end of each shelf 11 is aligned in order from the bottom stage in y₁ direction and the capturing direction of the camera 30 is in z₁ direction, the present invention is not limited to this. Any method may be selected as long as the position in which the box 50 is placed can be identified by use of a captured image of the camera 30. For example, even if the front end of each shelf 11 is in a same position in y₁ direction, it is satisfactory if the capturing direction of the camera 30 is inclined from z₁ direction as shown in Fig. 9. In other words, it is satisfactory if the front end of each shelf 11 is aligned in a direction perpendicular to the front end extending direction, in order of proximity of the shelf 11 from the camera 30, in a view from the capturing direction of the camera 30. As a result, the camera 30 can capture an image of the front end of each shelf 11.

In addition, although an example is shown in which the processor 61 identifies the shelf 11 on which the box 50 is placed on the basis of the position of the box 50 in y₂ direction in the captured image, the present invention is not limited to this. Any method can be selected as long as the processor 61 can identify the shelf 11 on which the box 50 is placed. For example, the processor 61 may identify the shelf 11 on the basis of a size of the marker 51 reflected in the captured image. In a case in which sizes of markers 51 are identical, the farther the position of the box 50 is from the camera 30, the smaller the size of the marker 51 reflected in the captured image is. In addition, the shelf 11 on which the box 50 is place may be identified on the basis of a length of the marker 51 in x₁ direction.

Although in the above described method of embodiment an example in which the screen 13 is provided at the front end of the shelf 11 is shown, the present invention is not limited to this. Any screen 13 may be selected as long as the screen 13 can display the display area 100 corresponding to the box 50. For example, the screen 13 may be provided on the box 50.

In addition, although an example in which the monitoring range 41 is set on the front side of the item shelf 10 is shown, the present invention is not limited to this. Any method may be selected as long as the processor 61 can identify the box 50 to which the worker W extends his arm on the basis of the detection result of the sensor 40.

Although an example in which the sensor 40 detects a fact of touching the screen 13 at the end of picking operation or the like is shown, the present invention is not limited to this. For example, the screen 13 may be provided with a touch sensor. In this case, when an object touches the screen 13, the screen 13 detects a position thereof and transmits the detection result to the processor 61. In addition, the screen 13 may be provided with a plurality of switches to operate when the picking operation ends. The processor 61 identifies the position of the operated switch and judges that the picking operation is ended. In addition, an area that the worker W touches after picking up an item may be provided in a single area or a plurality of areas which is/are different from the display area 100. It should be noted that switches and/or touch sensors may be used as the setting request area 110 and replenishment request area 120, similarly.

The above described process is an example and the order of each step and/or the processing content thereof may be changed within a range that does not inhibit the function thereof. In addition, the described configuration may be arbitrary changed within a range that does not inhibit the function. For example, the number of stages of shelves 11 on which the boxes 50 are placed may be arbitrary selected. In addition, although an example of detecting a marker 51 in a range of each shelf 11 in a captured image in order to identify a position of a box 50 is shown, the present invention is not limited to this. For example, a position of a marker 51 may be detected at first and then a shelf 11 on which a box 50 is placed may be identified on the basis of a position in y₂ direction of the detected marker 51. In addition, in a case of identifying a position of a box 50 by use of the camera 30, the operation assist device 1 may be provided with a camera 30 and a processor 61. In addition, in a case of identifying an item to replenish, the operation assist device 1 may be provided with a sensor 40 and a processor 61. In addition, although the operation assist device 1 is described with an example of operation for picking up an item from a box 50, the present invention is not limited to this. For example, it can be understood that the operation assist device 1 can be applied to an operation of storing items by replacing the operation of picking up items with an operation of storing items.

### [Description of Symbols]

- 1: Operation assist device
- 10: Item shelf
- 11: Shelf
- 11-1: First shelf
- 11-2: Second shelf
- 11-3: Third shelf
- 11-4: Fourth shelf
- 11-5: Fifth shelf
- 12: Bar
- 13: Screen
- 13-1: First screen
- 13-2: Second screen
- 13-3: Third screen
- 14: Arm
- 15: Arm
- 20: Projector
- 30: Camera
- 40: Sensor
- 41: Monitoring range
- 50: Box
- 50-1: First box
- 51: Marker
- 60: Management terminal
- 61: Processor
- 62: Display device
- 63: Input device
- 64: Interface
- 70: Output device
- 100: Display area
- 100-1: First display area
- 110: Setting request area
- 120: Replenishment request area
- 200: Box information
- F: Floor
- W: Worker

## Claims

1. An operation assist device comprising:
a camera configured to acquire a captured image of an item shelf on which a plurality of boxes are arranged;
a processor configured to identify a position of a first box among the plurality of boxes, based on the captured image, and determine a position of a display area corresponding to the first box; and
a projector configured to display an instruction destined to a worker in the display area.

2. The operation assist device according to claim 1,
wherein the first box is attached with a marker,
wherein the captured image reflects the marker, and
wherein the processor identifies the position of the first box based on a position of the marker in the captured image.

3. The operation assist device according to claim 1 or 2,
wherein the item shelf comprises a plurality of shelves on which the plurality of boxes are aligned,
wherein a first direction is a direction along which front ends of the plurality of shelves extend, and
wherein each shelf included in the plurality of shelves are arranged so that a front end of said each shelf is aligned, in a second direction perpendicular to the first direction, in an order of proximity of the shelf from the camera, in a view from a capturing direction of the camera.

4. The operation assist device according to claim 3,
wherein the processor is configured to:
identify a position of the first box in the first direction on said each shelf, based on the position of the first box in the first direction; and
identify a shelf on which the first box is arranged among the plurality of shelves, based on the position of the first box in the second direction.

5. The operation assist device according to any one of claims 1 to 4, further comprising a sensor configured to detect a position of an object in a monitoring area set to the item shelf,
wherein the box is configured to contain items,
wherein the processor is configured to:
in a first mode, detect a mistake in picking operation, based on a detection result of the sensor; and
in a second mode, identify an item of which a replenishment is required, based on the detection result of the sensor.

6. The operation assist device according to claim 5,
wherein the processor switches from the first mode to the second mode when in the first mode the sensor detects the object in a first area in the monitoring area.

7. The operation assist device according to claim 6,
wherein the processor switches from the second mode to the first mode when in the second mode the sensor detects the object in the first area.

8. The operation assist device according to any one of claims 5 to 7,
wherein the processor transmits an image information which shows that a switching to the second mode is done to the projector.

9. An operation assist device comprising:
a sensor configured to detect a position of an object in a monitoring area set to an item shelf which contains an item; and
a processor,
wherein the processor is configured to:
in a first mode, detect a mistake in picking operation, based on a detection result of the sensor; and
in a second mode, identify an item to which a replenishment is required, based on the detection result of the sensor.
